# EUROPÄISCHE PATENTSCHRIFT

(11) **EP 2 986 953 B1**
(45) Veröffentlichungstag und Bekanntmachung des Hinweises auf die Patenterteilung: **08.08.2018**
(21) Anmeldenummer: 14717671.3
(22) Anmeldetag: 10.04.2014
(51) Int. Cl.: G01F 15/18, G01F 5/00

(54) **DURCHFLUSSMESSER**
FLOWMETER
DÉBITMÈTRE

(30) Priorität: 18.04.2013 DE 102013006670
(43) Veröffentlichungstag der Anmeldung: 24.02.2016
(73) Patentinhaber: Diehl Metering GmbH, 91522 Ansbach (DE)
(72) Erfinder: SONNENBERG, Hans-Michael, 91522 Ansbach (DE)
(74) Vertreter: Diehl Patentabteilung
(86) Internationale Anmeldenummer: PCT/EP2014/000959
(87) Internationale Veröffentlichungsnummer: WO 2014/169998

(56) Entgegenhaltungen:
- EP-A1- 1 091 195
- EP-A1- 2 482 044
- US-A- 4 653 321
- US-A- 5 083 455
- US-A1- 2003 094 041

## Beschreibung

Die Erfindung betrifft einen Durchflussmesser für ein Fluid, umfassend mindestens zwei Kanäle, die je einen Boden, eine Decke und zwei Wände aufweisen, wobei mindestens einer der Kanäle ein Messkanal ist, in dem eine Messeinrichtung angeordnet ist.

Für Messungen von Fluidströmen in Kanälen und Rohrleitungen ist es vorteilhaft, einen Teilstrom vom Hauptstrom zu trennen und nur den Teilstrom mittels einer Messeinrichtung zu messen. Bei der Verwendung einiger Messprinzipien ist dies sogar notwendig, da diese keine Vollströmung erfassen können. Einige Messprinzipien, beispielsweise das thermische Messprinzip zur Durchflussmessung, können nur kleine Volumenbereiche erfassen, andere Messprinzipien, wie beispielsweise Ultraschallmessungen der Strömungsgeschwindigkeit, müssen bei hohen Volumenströmen mehrfach angewendet werden, um eine ausreichende Erfassung des Volumenstroms sicherzustellen.

Die Messung an einem Teilstrom durchzuführen ermöglicht zudem eine leichtere Skalierung der Messeinrichtung auf verschiedene Durchflussmengen, Rohrgrößen und ähnliches.

Messungen von Teilströmungen erfolgen üblicherweise durch Erzeugung eines Staudrucks durch ein in der Hauptströmung angeordnetes Staudruckelement, wobei vor bzw. hinter dem Staudruckelement zumindest ein Messkanal abzweigt, in dem die Messung des Fluids erfolgt. Bei dieser Art der Anordnung ist die Aufteilung der Strömung, also insbesondere der Anteil der Strömung der durch den Messkanal fließt, abhängig von den Betriebsbedingungen des Durchflussmessers, also insbesondere der Durchflussmenge, aber auch der Temperatur, der Art des Fluids und des Drucks. Dies führt zu einer Verfälschung der Messung, die nachträglich kompensiert werden muss.

Zudem ist es vorteilhaft, wenn sowohl im Messkanal, als auch im Bereich des Staudruckkörpers laminare Strömungen erzeugt werden. Daneben ist die Herstellung schmaler Kanäle, wie sie zumindest für den Messkanal notwendig sind, sehr aufwendig.

Aus der EP 2 482 044 A1 ist ein Durchflussmesser bekannt, der ein Gehäuse mit einer oder mehreren Unterteilungen aufweist, die gemeinsam mit dem Gehäuse zwei oder mehr Unterkanäle ausbilden. In einem dieser Unterkanäle ist ein Flusssensor angeordnet. Das Gehäuse kann durch einen Deckel verschlossen werden, der gemeinsam mit dem Gehäuse den Fluidkanal bzw. die Unterkanäle ausbildet.

In der EP 1 091 195 A1 ist ein Durchflussmesser offenbart, bei dem ein Teil der Strömung in einen Messkanal abgezweigt wird, welcher durch eine Wand in zwei Unterkanäle aufgeteilt ist.

Die US 5,083,455 A beschreibt einen Luftmengenmesser für einen Verbrennungsmotor, der in Messrohr aufweist, welches aus einem im Querschnitt U-förmigen Unterteil und einem ebenen Deckel besteht.

Aus der US 2003/0094041 A1 und der US 4,653,321 A sind Durchflussmessgeräte bekannt, in denen der Flusskanal durch eingebrachte Wände in mehrere Unterkanäle unterteilt ist.

Die US 2012/0103086 A1 beschreibt einen Durchflussmesser, der ein Gehäuse, ein Stützelement und ein Flussmesselement umfasst. Durch das Einbringen eines aus einem ersten und einem zweiten Block bestehenden Harz-Sensorkörpers in das Messrohr entstehen mehrere Kanäle. Ein Teil des Fluides strömt durch den Harz-Sensorkörper, während ein Teil des Fluides durch das umgebende Rohr strömt.

Der Erfindung liegt die Aufgabe zugrunde, einen Durchflussmesser anzugeben, der dem Stand der Technik gegenüber insbesondere bezüglich der Aufteilung der Strömung verbessert ist und der kostengünstig herstellbar ist.

Die Aufgabe wird durch einen Durchflussmesser der eingangs genannten Art mit den Merkmalen des Patentanspruchs 1 gelöst, wobei der Durchflussmesser eine die Kanäle ausbildende Kanaleinheit umfasst, wobei die Kanaleinheit aus einem ersten Bauteil und einem zweiten Bauteil besteht, die ineinandergefügt sind und sich im zusammengefügten Zustand unter Ausformung der Kanäle ergänzen.

Der Erfindung liegt die Idee zugrunde, dass es bei einer Messung in einem Teilstrom vorteilhaft ist, wenn die Strömung auf eine Vielzahl, insbesondere gleicher, Kanäle verteilt wird. Eine solche Vielzahl paralleler Kanäle ist vorteilhaft, da in diesem Fall die Verteilung der Ströme auf die Kanäle eine geringere Abhängigkeit von weiteren Parametern wie Druck, Temperatur und Durchflussmenge sowie Eigenschaften des Fluids aufweist, als in dem Fall, in dem ein Messkanal vor bzw. hinter einem Staudruckelement abgezweigt wird. Eine Kanaleinheit, die eine Vielzahl von Kanälen umfasst, ist einteilig aber nur sehr aufwendig und kaum mit ausreichender Präzision herzustellen. Auch eine Herstellung von einer Vielzahl von Einzelkanälen, die in einem Zuflusskanal münden, ist sehr aufwendig.

Daher wird beim erfindungsgemäßen Durchflussmesser die Kanaleinheit, die die zumindest zwei Kanäle ausbildet, aus zwei Bauelementen zusammengesetzt, wobei die Kanäle erst beim Ineinanderfügen der Bauteile ausgebildet werden. Damit ist es besonders einfach möglich, einen Durchflussmesser mit einer Vielzahl paralleler Kanäle herzustellen, welche bevorzugt auch parallele Wandabschnitte im einzelnen Kanal bzw. Abschnitte mit konstanten Querschnitten aufweisen können. Im einfachsten Fall ist das erste und das zweite Bauteil jeweils eine identische Platte, auf der Wandabschnitte angeordnet sind. Werden diese Platten nun so zusammengesetzt, dass die Wandabschnitte zueinander hinweisen, werden beim Zusammenfügen der Bauteile Kanäle zwischen den Platten und den Wandabschnitten gebildet. Die einzelnen Bauteile bestehen in diesem Fall jedoch ausschließlich aus einer Basis und Wandabschnitten und sind damit mit vielen Herstellungsverfahren, wie zum Beispiel Blechverformung oder Kunststoffspritzguss, leicht herzustellen.

Es ist noch eine Vielzahl weiterer Ausführungen denkbar. So kann ein erstes Bauteil auch aus einer Basis bestehen und daran angeordneten Wandabschnitten, die Teile der Wände bilden. Das zweite Bauteil kann in diesem Fall ebenfalls aus einer Basis und Wandabschnitten bestehen, die die weiteren Teile der Wände bilden.

Ein wesentlicher Vorteil der Ausbildung der Kanaleinheit aus zwei oder mehr Bauteilen ist es, dass in diesem Fall auch leicht mehrere parallele Kanäle gebildet werden können, die jedoch Verengungen, Kurven, Abknickstellen oder ähnliches aufweisen. Solche Kanäle sind allgemein schwer einteilig herstellbar. Insbesondere bei einer Herstellung mit Kunststoffspritzguss können solche Kanaleinheiten nicht geformt werden. Auch daher ist die Herstellung der Kanaleinheit aus zwei Bauteilen vorteilhaft.

Bei der Herstellung der Kanaleinheit sollen auf engstem Raum eine Vielzahl von Kanälen hergestellt werden. Insbesondere zum Erreichen einer laminaren Strömung ist es vorteilhaft, wenn die Kanäle sehr schmal und sehr gleichmäßig sind. Typische Kanalbreiten liegen beispielsweise im Bereich von 0,5 bis 1,5 Millimeter. Typische Wandstärken liegen im Bereich von 1 bis 3 Millimetern. Da zumindest im Messbereich Turbulenzen vermieden werden sollen und eine möglichst laminare Strömung erreicht werden soll, können bereits geringe Fertigungstoleranzen das Messergebnis deutlich verschlechtern. Zudem würden Fertigungstoleranzen der Wände auch zu unterschiedlichen Strömungswiderständen paralleler Kanäle führen und damit wiederum zu einer Strömungsteilung, die von einer Vielzahl von Parametern abhängt.

Auch eine hohe Parallelität der Kanalwände ist wesentlich, um optimale Strömungseigenschaften zu erreichen. Eine große Parallelität der Wände ist jedoch, insbesondere bei Nutzung eines Spritzgussverfahrens, kaum möglich, wenn beide Wände durch das gleiche Bauteil geformt werden. Um eine zuverlässige Entformung bei hoher Präzision zu ermöglichen, müssen die Wandabschnitte, die aus dem Bauteil herausragende schmale Abschnitte bilden, konisch ausgebildet werden. Bei Spritzguss sind typische Entformungsschrägen von 0,5 bis 2,5 Prozent üblich. Sollen hohe Präzisionen erreicht werden, so ist eine Entformungsschräge von mindestens 2 Prozent vorteilhaft. Sollen die Wände beispielsweise 1 Millimeter dick sein und 20 Millimeter hoch, so würde bereits bei einer Entformungsschräge von 0,5 Prozent eine Änderung der Wanddicke über die Kanalhöhe von ca. 0,2 Millimeter auftreten. Bei einer typischen Kanalbreite von 1 Millimeter führt dies zu einer Veränderung der Kanalbreite von 20 Prozent.

Um dennoch eine gute Parallelität der Wände, insbesondere bei der Verwendung von Spritzgussverfahren zur Herstellung der Bauteile, die die Wände bilden, zu erreichen, ist es vorteilhaft, dass bei wenigstens einem der Kanäle, in einem Längsabschnitt des Kanals, die erste Wand des Kanals aus dem ersten Bauteil gebildet ist und die zweite Wand des Kanals aus dem zweiten Bauteil. Insbesondere kann dies für alle Kanäle gelten. In diesem Fall kann das erste Bauteil derart hergestellt sein, dass die Entformungsschräge einer ersten Wand eines Kanals in eine Richtung verläuft und das zweite Bauteil derart, dass die Entformungsschräge einer zweiten Wand des Kanals in die andere Richtung verläuft, so dass beim Zusammenstecken der Bauteile zur Kanaleinheit Kanäle gebildet werden, deren Wände parallel sind.

Alternativ können als Wände auch plattenartige Bauteile genutzt werden, die in eine Basis, die aus einem oder mehreren weitern Bauteilen gebildet ist, eingefügt werden. Solche Platten können ohne Abschrägungen aus diversen Materialien hergestellt werden. In diesem Fall ist es besonders einfach, für jede der Wände ein separates Bauteil zu nutzen. Auch in diesem Fall werden also die Wände des Kanals aus zwei verschiedenen Bauteilen gebildet.

Änderungen in der Struktur des Kanals können leicht zu Turbulenzen der Strömung führen. Um eine gute laminare Strömung zu erreichen, sollte deshalb ein einheitlich ausgebildeter Kanalabschnitt eine gewisse Mindestlänge aufweisen. Es ist daher vorteilhaft, wenn der Längsabschnitt mindestens 7 Millimeter, insbesondere mindestens 10 Millimeter lang ist.

Es ist besonders vorteilhaft, dass das erste und das zweite Bauteil jeweils eine Basis und von der Basis abstehende Wandabschnitte aufweisen. Das erste und das zweite Bauteil bilden also jeweils eine kammartige Struktur. Insbesondere kann die Basis des ersten Bauteils den Boden mehrerer paralleler Kanäle der Kanaleinheit bilden und die Basis des zweiten Bauteils die Decke mehrerer dieser Kanäle. Die abstehenden Wandabschnitte des ersten und des zweiten Bauteils können für jeden Kanal jeweils eine Wand ausbilden. Damit wird insbesondere bei der Verwendung von Kunststoffbauteilen oder anderen mit Gussverfahren hergestellten Bauteilen wie oben beschrieben eine wesentliche Verbesserung der Parallelität der Wände erreicht.

Das Ineinandergreifen zweier kammartiger Bauteile zur Ausbildung der Kanaleinheit ist auf vielfältige Weise möglich. So kann im zusammengefügten Zustand für parallele Kanäle innerhalb einer Ebene jeweils ein Wandabschnitt zwei Kanäle trennen. So würde beispielsweise ein erster Kanal auf seiner linken Seite durch einen Wandabschnitt des ersten Bauteils und auf seiner rechten Seite durch einen Wandabschnitt des zweiten Bauteils begrenzt. An den Wandabschnitt des zweiten Bauteils würde unmittelbar ein rechts des ersten Kanals liegender zweiter Kanal grenzen, der daher auf seiner linken Seite durch den Wandabschnitt des zweiten Bauteils begrenzt ist und auf seiner rechten Seite durch einen weiteren Wandabschnitt des ersten Bauteils usw.

Um die Präzision der gefügten Teile zu gewährleisten, können die Teile mit Fixierelementen ausgestattet sein, die beim Fügen passgenaue Positionierungen ermöglichen. Dies kann z.B. durch Erhöhungen im ersten Bauteil und durch Vertiefungen im zweiten Bauteil gebildet werden. Die Fixierelemente können gebildet sein durch:
a) eine Verlängerung der Kanalwände, z.B. bei plattenartigen Bauteilen, die in eine Nut gesteckt werden,
b) eigene Nut- und Federsysteme,
c) Zapfen mit Passbohrungen oder
d) Wandabschnitte, die den Fügepartner umfassen.

Die Fixierelemente können auch konisch gestaltet sein, um ein Fügen zu erleichtern. Ebenfalls können zusätzliche Einfädelhilfen die Montage der Teile vereinfachen.

Es kann jedoch auch vorteilhaft sein, zumindest in einem Abschnitt der Kanaleinheit die Kanäle zu beabstanden. Eine Verwendung von dicken Wänden kann insbesondere beim Spritzgussverfahren nachteilig sein, da an solchen Wänden Einfallstellen auftreten können, die zu Ungenauigkeiten der Kanalgeometrie und damit zu verstärkt turbulenten Strömungen führen würden. In diesem Fall ist es vorteilhaft, wenn die Wände der Zwischenräume jeweils durch Abschnitte des gleichen Bauteils gebildet werden. Um dies zu erreichen könnte ein erster Kanal wiederum auf seiner linken Seite durch einen Wandabschnitt des ersten Bauteils und auf seiner rechten Seite durch einen Wandabschnitt des zweiten Bauteils begrenzt sein. An diesen Wandabschnitt des zweiten Bauteils würde jedoch ein Zwischenraum angrenzen, der auf seiner linken Seite durch den Wandabschnitt des zweiten Bauteils und auf seiner rechten Seite durch einen weiteren Wandabschnitt des zweiten Bauteils begrenzt ist. Erst an diesen zweiten Wandabschnitt des zweiten Bauteils würde sich der zweite Kanal anschließen usw.

Es ist anzumerken, dass in den beiden vorgenannten Beispielen zwar alle Kanäle parallele Wände aufweisen, nebeneinander liegende Kanäle jedoch nicht parallel verlaufen. Unter Umständen kann es gewünscht sein, dass nebeneinander liegenden Kanäle parallel laufen. Es kann auch gewünscht sein, eine Variation der Wanddicke dadurch zu erreichen, dass nur in einem Abschnitt des Kanals zusätzliche Wände eingefügt werden. In beiden Fällen kann es vorteilhaft sein, ein erstes und ein zweites Bauteil so ineinanderzufügen, dass jeweils ein Wandabschnitt der ersten Wand und ein Wandabschnitt der zweiten Wand im direkten Kontakt zueinander sind. In diesem Fall wird beispielsweise eine Anordnung erreicht, bei der die linke Wand jedes Kanals durch einen Wandabschnitt eines ersten Bauteils und die rechte Wand jedes Kanals durch einen Wandabschnitt eines zweiten Bauteils ausgebildet ist.

Die von der Basis abstehenden Wandabschnitte sind im Längenabschnitt im Querschnitt, insbesondere gleichschenklig, trapezförmig. Wie erläutert, sind insbesondere bei Spritzgussteilen, aber auch bei einer Vielzahl anderer Herstellungsverfahren von Bauteilen Entformungsschrägen an hervorstehenden Teilen der Bauteile notwendig, um eine hohe Präzision zu erreichen. Häufig ist es jedoch möglich, zu wählen, auf welcher Seite eines hervorstehenden Abschnitts eine Entformungsschräge geformt werden soll. In jedem Fall wird jedoch durch die Bildung der Entformungsschrägen eine trapezförmige Struktur geschaffen.

Um die oben beschriebenen gleichmäßigen Kanalstrukturen zu bilden ist es vorteilhaft, wenn diese Trapezformen gleichschenklig sind, da in diesem Fall besonders einfach ein Zusammensetzen von Kanälen mit parallelen Wänden möglich ist. Andererseits ist es jedoch möglich, dass eine ungleichmäßige Schenkellänge der Trapezform gewünscht ist. Dies ist beispielsweise dann der Fall, wenn die Kanalwand nicht mehr im Wesentlichen parallel zur Strömungsrichtung verläuft, sondern, beispielsweise in einem Bereich, in dem der Kanal schmäler wird, von der Parallelität zur Strömungsrichtung abweicht. Um eine gleichmäßige Umlenkung einer laminaren Strömung zu erreichen ist es häufig wünschenswert, wenn der Kanal über die gesamte Höhe eine gleichförmige Wand aufweist. Die Entformungsschräge kann auf der Kanal-abgewandten Seite einer Wand angeordnet werden, wenn die andere Seite der Wand an einen Zwischenraum grenzt, um die dem Kanal zugewandte Seite der Wand möglichst wenig abzuschrägen.

Die beschriebenen Wandabschnitte bilden Vorsprünge einer Basis, die Decke bzw. Boden der Kanäle bildet. Die Basis kann zumindest im Längsabschnitt senkrecht zur Kanalrichtung flach oder ringförmig sein. Eine flache Basis mit daraus hervorspringenden Wandabschnitten kann genutzt werden, um eine Kanaleinheit zu bilden, die eine Vielzahl von Kanälen in einer Ebene aufweist. In einigen Anwendungsfällen ist es jedoch vorteilhaft, die Spaltkanäle ringförmig anzuordnen. In diesem Fall kann eine ringförmige Basis für das erste und zweite Bauteil genutzt werden.

Wie erläutert entspricht die Abschrägung der Wandabschnitte typischerweise einer Entformungsschräge, beispielsweise zur Nutzung in einem Spritzgussverfahren. Es ist daher vorteilhaft diese Abschrägung in einem Bereich zu variieren, der zu einer Entformung der Bauteile besonders vorteilhaft ist. Sehr geringe Entformungsschrägen und damit nahezu rechte Winkel zwischen der Basis und dem Wandabschnitt sind vorteilhaft, da in diesen Fällen ohne Zusatzaufwand nahezu parallele Kanäle erreicht werden und auch ein Umlenken der Strömung oder ein Verbreitern oder Verschmälern der Kanäle besonders einfach möglich ist. Andererseits kann in vielen Verfahren mit einem größeren Winkel zwischen Basis und Wandabschnitt und damit mit einer größeren Entformungsschräge die Präzision des Formprozesses verbessert werden. Präziser geformte Wände führen zu geringeren Turbulenzen der Strömung damit zu einer Verbesserung des Messergebnisses des Durchflussmessers. In Anbetracht dieser Abwägung ist es vorteilhaft, wenn der Winkel zwischen Basis und mindestens einer Seitenfläche des trapezförmigen Segments zwischen 87,0° und 89,5°, insbesondere zwischen 87,5° und 88,7° ist.

Häufig ist es wünschenswert, in der Kanaleinheit eines Durchflussmessgeräts die Breite eines Kanals im Verlauf des Kanals zu variieren. Die einfachste Möglichkeit zur Variation der Kanalbreite wäre eine Änderung der Dicke der Wände. Eine solche Änderung der Wanddicke ist jedoch nicht bei allen Herstellungsverfahren problemlos möglich. So muss beispielsweise bei einer Herstellung der Wände aus Blechen das Blech gefaltet werden. Damit ist zum einen keine stufenlose Variation der Wanddicke möglich ist, zum anderen kann es sehr aufwendig sein, in diesem Fall einen gleichmäßigen Übergang zwischen dem breiteren und dem engeren Bereich ohne Verwirbelungen zu erreichen. Auch bei einer Herstellung der Wände mit einem Spritzgussverfahren kann eine Variation der Wanddicke problematisch sein. Insbesondere bei einer starken Variation der Kanalbreite müsste sich in diesem Fall die Wandstärke stark ändern, wodurch jedoch bei Spritzgussverfahren die Gefahr besteht, Einfallstellen zu erzeugen und damit die Präzision der Kanalgeometrie zu verringern. Es ist daher in der Regel vorteilhaft, andere Methoden zur Variierung der Kanalbreite zu nutzen.

So ist es möglich, dass wenigstens einer der Kanäle wenigstens einen Abwinkelungsbereich aufweist, in dem sich die Richtung des Kanals ändert, wobei die Breite des Kanals vor und nach dem Abwinkelungsbereich unterschiedlich ist und wobei insbesondere die Wände des Kanals im Abwinkelungsbereich die gleiche Form aufweisen. Dies ist besonders einfach möglich, wenn die Wandabschnitte, die die Wände eines oder mehrerer Kanäle bilden, alle gleich geformt sind, wobei sie mindestens an einer Stelle eine Krümmung oder einen Knick aufweisen. Weist die Kanaleinheit zwei oder mehr dieser Wandabschnitte auf, die senkrecht zur Kanalrichtung zueinander versetzt sind, so bilden diese Wandabschnitte nun vor der Knick- oder Krümmungsstelle wie vorangehend beschrieben, gerade Kanäle aus. Nach der Knick- oder Krümmungsstelle bleibt der Abstand senkrecht zur ursprünglichen Kanalrichtung zwar konstant, der Wandabstand in Kanalrichtung ist jedoch geringer. Verläuft der Kanal in diesem Bereich in einem Winkel α zur ursprünglichen Kanalrichtung, so kann die Breite des Kanals in diesem zweiten Bereich als Produkt der ursprünglichen Kanalbreite mit dem Kosinus von α ausgedrückt werden.

Alternativ oder ergänzend kann ein Verengungsbereich im Kanal auch dadurch gebildet werden, dass ein zweiter Wandabschnitt derart in der Kanaleinheit angeordnet ist, dass in einem ersten Bereich die Wand zwischen zwei Kanälen ausschließlich aus einem Wandabschnitt besteht und in einem zweiten Kanalbereich aus zwei Wandabschnitten. Dabei ist es besonders vorteilhaft, wenn diese beiden Wandabschnitte Teil zweier unterschiedlicher Bauteile sind. Es ist also möglich, dass wenigstens einer der Kanäle mindestens einen ersten Teilbereich und mindestens einen zweiten Teilbereich aufweist, wobei mindestens eine der Wände im ersten Teilbereich aus einem anderen Bauteil gebildet ist als im zweiten Teilbereich.

Eine Verschmälerung der Kanäle durch zusätzliche Wandelemente ist jedoch auch möglich, wenn die Kanaleinheit aus zwei oder mehr ineinandergefügten Bauteilen besteht, die jeweils eine Basis und von dieser Basis abstehende Wandabschnitte aufweisen. Dies wird beispielhaft an einer bereits oben beschriebenen Kanaleinheit erläutert, bei der das erste Bauelement die linke Wand des ersten Kanals, die rechte Wand des zweiten Kanals usw. bildet und das zweite Bauteil die rechte Wand des ersten Kanals, die linke Wand des zweiten Kanals usw. Diese ersten und zweiten Bauteile können nun derart modifiziert werden, dass zumindest an einem der Bauteile zusätzliche Wandabschnitte vorgesehen sind, die beim Zusammenfügen der beiden Bauteile bündig an einem Wandabschnitt des anderen Bauteils anliegen. Sind diese zusätzlichen Wandabschnitte nun nur in einem oder mehreren Bereichen des Bauteils vorgesehen, so kann damit eine Verengung des Kanals in genau diesen Bereichen erreicht werden.

Es ist insbesondere vorteilhaft, in beiden der Bauteile zusätzliche Wandabschnitte in dem Bereich vorzusehen, in dem der Kanal verengt werden soll. Damit kann erreicht werden, dass in den Bereichen, in denen keine Verengung vorliegt, die Wand zwischen zwei Kanälen jeweils aus einem Wandabschnitt gebildet ist und in den Bereichen, in denen der Kanal verengt werden soll, die Wand zwischen zwei Kanälen aus zwei Wandabschnitten gebildet ist. Damit wird weiterhin erreicht, dass die beiden Wandabschnitte eines Kanals aus unterschiedlichen Bauteilen gebildet sind, wodurch die Entformungsschrägen kompensiert werden und die Wände parallel bleiben. Es sei jedoch angemerkt, dass beim Übergang vom nicht verengten zum verengten Bereich in diesem Fall die Neigungsrichtung der Kanäle verändert wird. Dies kann wiederum zu geringfügigen Turbulenzen führen, wodurch beispielsweise eine Messung erst nach einer gewissen Mindestlänge des verengten Abschnitts durchgeführt werden sollte.

Ergänzend oder alternativ ist möglich, dass mindestens zwei der Kanäle mindestens einen Verengungsbereich aufweisen, in dem die Wände der Kanäle derart geführt sind, dass sich die Breite der Kanäle verringert, wobei sich im Verengungsbereich die Dicke wenigstens einer Wand zwischen den Kanälen erhöht oder je eine der Wände eines ersten und eines zweiten der Kanäle entgegengesetzte Abwinklungen aufweisen, wodurch die Kanäle auseinanderlaufen und einen Zwischenraum bilden. Wie bereits erwähnt, ist eine Variation der Wanddicke die einfachste Möglichkeit, die Breite der Kanäle zu variieren. Es sei jedoch angemerkt, dass eine solche Variation der Wanddicke nicht bei jedem Herstellungsverfahren mit einer hohen Präzision möglich ist. Daher ist es häufig vorteilhaft, die Wandabschnitte derart zu führen, dass zwischen zwei Wandabschnitten ein Zwischenraum entsteht.

Die Bildung dieses Zwischenraums ist auf vielfältige Weise möglich. So ist es möglich, dass in Strömungsrichtung des Fluids betrachtet vor dem Verengungsbereich ein Wandabschnitt eines der Bauteile zwischen den zwei Kanälen liegt, zwischen denen im bzw. hinter dem Verengungsbereich der Zwischenraum angeordnet ist. In diesem Fall ist es vorteilhaft, wenn die zwei Wände, die den Zwischenraum begrenzen ebenfalls durch Wandabschnitte des gleichen Bauteils gebildet werden. Damit weist das Bauteil einen Y-förmigen Wandabschnitt auf, der in dem Bereich vor dem Verengungsbereich aus einem einfachen Wandabschnitt besteht und im Bereich hinter dem Verengungsbereich aus zwei Wandabschnitten und bei dem im Verengungsbereich die Wandabschnitte unter einem gewissen Winkel auseinanderlaufen.

Alternativ ist es jedoch auch möglich, das im bzw. hinter dem Verengungsbereich die Wände, die den Zwischenraum begrenzen aus Wandabschnitten von zwei Bauteilen gebildet sind. Meist soll ein Fluidaustausch zwischen den Kanälen im und vor dem Verengungsbereich vermieden werden. Um dies zu ermöglichen, kann die Wand zwischen zwei Kanälen bereits vor dem Verengungsbereich aus zwei Wandabschnitten zweier Bauteile gebildet sein. Es ist jedoch auch möglich, dass erst im Verengungsbereich ein Wandabschnitt eines zweiten Bauteils an den Abschnitt eines ersten Bauteils, der die Wand vor dem Verengungsbereich bildet, angefügt wird. Eine solche Anordnung stellt jedoch besonders hohe Anforderungen an die Dichtigkeit des Kontaktbereichs zwischen dem Wandabschnitt des ersten Bauteils und des zweiten Bauteils.

Es ist möglich, dass die Wände des Zwischenraums frei in einem Kanal enden, oder dass der Zwischenraum abgeschlossen ist. So kann es gewünscht sein, dass die Kanäle zunächst wieder erweitert werden, bevor sie am Ende der Kanaleinheit wieder zusammengeführt werden. In diesem Fall kann das Ende des Zwischenraums ähnlich ausgebildet sein, wie der Verengungsbereich, nur dass nun die Wände in die entgegengesetze Richtung laufen.

Häufig erfolgt eine Messung jedoch bereits im Verengungsbereich und die Kanäle sollen gleich hinter dem Verengungsbereich wieder zusammengeführt werden. In diesem Fall können die Wände des Zwischenraums frei in einem Kanal enden.

Insbesondere, wenn die Wände des Zwischenraums frei im Kanal enden und wenn sich die Zusammensetzung des Fluids zeitlich ändert, ist es vorteilhaft, wenn Boden und/oder die Decke im Bereich des Zwischenraums mindestens eine Öffnung zur Zuführung von Fluid, insbesondere gereinigtem Fluid, aufweisen. Ist die Kanaleinheit derart aufgebaut, dass ein Zwischenraum einseitig offen ist, so erfolgt in diesem Zwischenraum nur eine geringe Fluidströmung. Damit ist auch der Gasaustausch innerhalb dieses Zwischenraums verringert. Wird nun ein Fluid gemessen, bei dem sich die Zusammensetzung stark ändern kann, beispielsweise bei der Messung von Erdgas oder ähnlichem, so würde, ohne die Öffnung zur Zuführung von Fluid, ein Bereich entstehen, in dem sich die Fluidzusammensetzung nur langsam ändert. In diesem Fall könnte Gas aus dem Zwischenraum zurück in den Messbereich diffundieren und die Messung verfälschen. Um dies zu vermeiden ist eine Spülung des Zwischenraums vorteilhaft.

Wie eingangs beschrieben, sollte im Bereich, in dem das Gas umgelenkt wird, die Wand des Kanals möglichst senkrecht sein, um eine gleichmäßige Umlenkung zu ermöglichen und die laminare Strömung zu erhalten. Es ist vorteilhaft, wenn im Verengungsbereich die Wand kanalseitig senkrecht auf Boden und Decke steht, wobei die Wand zwischenraumseitig abgeschrägt ist.

Weiterhin ist es vorteilhaft, eine möglichst große Zahl von Parallelkanälen zur Verfügung zu stellen. Damit ist die Messung an besonders kleinen Teilvolumina möglich und kann damit besonders genau und/oder besonders kostengünstig durchgeführt werden. Um die Anzahl der Messkanäle zu erhöhen, ist es vorteilhaft, wenn die Kanaleinheit aus mehreren Bauteilen zusammengesetzt ist und die Kanäle in wenigstens zwei Ebenen ausgebildet sind. Insbesondere zwei Ausführungsformen sind vorteilhaft.

Bei der Nutzung von Bauteilen, die aus einer Basis und von der Basis abstehenden Wandabschnitten bestehen, ist es vorteilhaft, wenn zumindest einige dieser Bauteile auf zwei gegenüberliegenden Seiten der Basis Wandabschnitte aufweisen. Damit kann ein einzelnes Bauteil in einer Ebene Teile der Wände und die Decke und in einer weiteren, darüber liegenden Ebene, Teile der Wände und den Boden mehrere Kanäle bilden.

Ein einziges Bauelement bildet somit jeweils Wände von Kanälen mehrerer Ebenen.

Wie eingangs beschrieben, soll die Kanaleinheit des Durchflussmessers vorzugsweise eine Vielzahl von Kanälen ausbilden, in denen möglichst auf der gesamten Länge, jedoch insbesondere im Bereich der Messeinrichtung eine laminare Strömung des Fluids erreicht wird, wobei vorzugsweise der Strömungswiderstand der Kanäle gleich ist. Es ist daher vorteilhaft, dass in einem Abschnitt der Kanaleinrichtung der mindestens 7 Millimeter, insbesondere mindestens 10 Millimeter, lang ist oder auf der ganzen Länge der Kanaleinheit die Breite jedes Kanals gleich ist, insbesondere zwischen 0,5 Millimeter und 1,5 Millimeter, und/oder das Verhältnis zwischen der Höhe und der Breite wenigstens eines der Kanäle mindestens 3:1, insbesondere mindestens 5:1, ist und/oder die Materialstärke der Wände 1 Millimeter bis 3 Millimeter, insbesondere 1,5 Millimeter bis 2,5 Millimeter ist.

Insbesondere sollten Abschnitte im Bereich der Messeinrichtung eine Mindestlänge aufweisen, um eine Stabilisierung der Strömung und einen Ausgleich der turbulenten Strömungen, die bei Änderungen der Kanalgeometrie auftreten, zu ermöglichen. Die Breite der Kanäle soll in der Regel möglichst gering gewählt werden, da in diesem Fall eine besonders gleichmäßige laminare Strömung erreicht werden kann. Zugleich muss die Breite der Kanäle jedoch so groß sein, dass unvermeidbare Fertigungstoleranzen nur zu einer unwesentlichen Störung der Strömung führen. Eine ähnliche Abwägung gilt für die Wandstärke. Insbesondere bei der Nutzung von Kunststoffspritzgussverfahren besteht bei zu dicken Wänden die Gefahr, dass Einfallstellen und damit Ungenauigkeiten der Kanalgeometrie entstehen. Zugleich sollte die Wandstärke jedoch wesentlich größer sein als die Fertigungstoleranzen bei der Herstellung der Bauteile. Zudem muss die Wand dick genug sein, um eine Entformungsschräge ausbilden zu können. Unter Berücksichtigung dieser Abwägungen ergeben sich die genannten Werte als optimale Bereiche.

Zudem ist zum Erreichen einer guten laminaren Strömung ein Kanal vorteilhaft, der im Vergleich zu seiner Höhe sehr schmal ist. Dies ist insbesondere vorteilhaft, da eine gewisse Verformung des Strömungsprofils nahe der Decke bzw. des Bodens unvermeidbar ist und bei einer Höhe, die ein Vielfaches der Breite ist, diese Bereiche sich nur über einen Bruchteil der Höhe erstrecken. Größere Verhältnisse von Höhe zu Breite, beispielsweise 10:1 oder 15:1, können vorteilhaft sein, da bei einem so großen Höhen zu Breiten Verhältnis der Einfluss der Höhe auf den Strömungswiderstand nahezu vernachlässigbar ist und damit beispielsweise für einen Kanal mit einer Höhenänderung eine Variation der Strömungsgeschwindigkeit erreicht werden kann, ohne dass der Strömungswiderstand des Kanals merklich verändert wird.

Zur Vermeidung von Verwirbelungen ist es zudem vorteilhaft, wenn das Verhältnis zwischen der Höhe und der Breite wenigstens eines der Kanäle auf der ganzen Länge der Kanaleinheit konstant bleibt.

Wie beschrieben ist es beim erfindungsgemäßen Durchflussmesser entscheidend, dass eine vorgegebene Kanalgeometrie erreicht wird. Eine Verschiebung der mindestens zwei Bauteile gegeneinander kann dazu führen, dass sich die Breite einiger Kanäle gegenüber anderer Kanäle ändert oder dass die Wände der Kanäle nicht parallel sind. In beiden Fällen sinkt die Messgenauigkeit erheblich. Es ist vorteilhaft, wenn im zusammengefügten Zustand ein an dem Bauteil oder separat angeordnetes Sicherungselement oder ein fester Sitz der Bauteile aneinander eine relative Verschiebung der Bauteile verhindert. Der feste Sitz der Bauelemente aneinander kann beispielsweise auch durch Dichtelemente verbessert werden, die verformbar sind und zwischen den Bauteilen angeordnet sind. In diesem Fall drücken die Bauteile die Dichtelemente aneinander, wodurch zum einen eine Verbesserung der Abdichtung der Kanäle untereinander, zum anderen unter Umständen ein festerer Sitz der Bauteile aneinander erreicht wird. Selbstverständlich ist eine Dichtung der Kanäle auch unabhängig von der Befestigung der Bauteile aneinander vorteilhaft.

Um eine wirtschaftliche Herstellung des Durchflussmessers zu ermöglichen, ist es vorteilhaft, wenn dieser mit preiswerten Herstellungsverfahren und aus günstigen Materialien hergestellt wird. Dazu können die Bauteile aus Kunststoff, insbesondere durch Spritzguss oder insbesondere die Einsteckbauteile aus Metall, vorzugsweise Metallblech hergestellt werden.

Da Begrenzungen der einzelnen Kanäle zumindest abschnittsweise aus mindestens zwei oder mehr Bauteilen bestehen, ist es ggf. notwendig, die Fügestellen zu dichten bzw. den Durchlass des Fluids soweit zu begrenzen, dass die Leckagen keinen wesentlichen Einfluss auf die Strömung im Messkanal und dem zugeordneten Messsystem haben. Dies ist besonders dort wichtig, wo Wandabschnitte Fluidbereiche trennen, die unterschiedliche dynamische oder statische Druckverhältnisse aufweisen. Dies ist z.B. der Fall, wenn Bauteile des Einlassbereiches neben Bauteile des Auslassbereiches liegen.

Durch ein vertieftes Ineinandergreifen der Teile, insbesondere bei einer labyrinthmäßigen Ausgestaltung, kann ein Spaltverlauf gebildet werden, durch den nur noch geringste Fluidmengen strömen können, die keinen Einfluss mehr auf die Strömung in den Spaltkanälen haben. Zusätzlich oder alternativ kann ein Dichtelement zwischen den Bauteilen eine Abdichtung ermöglichen. Dieses Dichtelement kann sowohl an einem Bauteil angespritzt werden oder als Formdichtung ausgestaltet sein. Idealerweise ist das Dichtelement ein Elastomer. Alternativ kann die Dichtung auch mittels eines abdichtenden Klebemittels erfolgen. Die Dichtungselemente können nur an denjenigen Wandabschnitten vorgesehen sein, bei denen eine Leckageströmung auftreten kann.
Die weiteren Vorteile und Einzelheiten der Erfindung ergeben sich aus den folgenden Ausführungsbeispielen und den zugehörigen Zeichnungen. Dabei zeigen:
- Fig. 1: eine geschnittene Ansicht eines Ausführungsbeispiels eines nicht erfindungsgemäßen Durchflussmessers,
- Fig. 2: eine geschnittene Ansicht eines Ausführungsbeispiels eines erfindungsgemäßen Durchflussmessers,
- Fig. 3: eine geschnittene Ansicht eines Ausführungsbeispiels eines nicht erfindungsgemäßen Durchflussmessers,
- Fig. 4: eine geschnittene Ansicht eines nicht erfindungsgemäßen Durchflussmessers,
- Fig. 5: eine geschnittene Ansicht eines Ausführungsbeispiels eines nicht erfindungsgemäßen Durchflussmessers,
- Fig. 6: eine geschnittene Ansicht eines weiteren Ausführungsbeispiels eines erfindungsgemäßen Durchflussmessers,
- Fig. 7: eine zweite geschnittene Ansicht des in Figur 6 gezeigten erfindungsgemäßen Durchflussmessers
- Fig. 8: eine geschnittene Ansicht eines weiteren Ausführungsbeispiels eines erfindungsgemäßen Durchflussmessers, und
- Fig. 9: eine zweite geschnittene Ansicht des in Fig. 8 gezeigten erfindungsgemäßen Durchflussmessers.

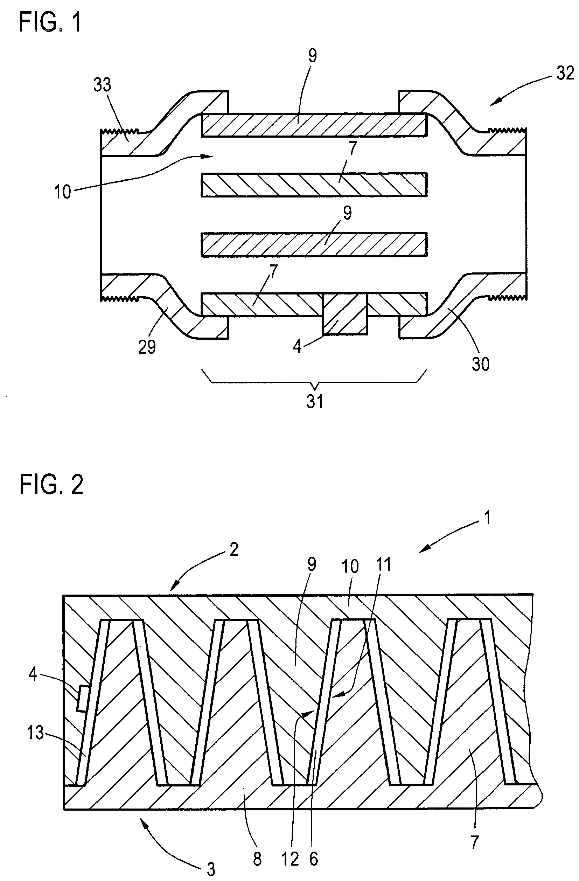

Fig. 1 zeigt eine geschnittene Ansicht eines nicht erfindungsgemäßen Durchflussmessers. Der Durchflussmesser 32 besteht aus fünf Bauteilen, den zwei Anschlussbauteilen 29, 30, die die Anschlüsse 33 des Durchflussmessers 32 ausbilden, einem ersten und einem zweiten Bauteil, die die Kanaleinheit 31 des Durchflussmessers 32 ausbilden und einer Messeinrichtung 4. Das erste und das zweite Bauteil sind senkrecht zur Bildebene ineinander gefügt und bilden die Kanäle aus. Dabei bildet das erste Bauteil den Boden der Kanäle sowie zwei der Wandabschnitte 7 und das zweite Bauteil, die nicht gezeigte Decke der Kanäle sowie die beiden Wandabschnitte 9. Die Anschlussbauteile 29, 30 sind elastisch und haltern die Kanaleinheit 31 durch eine kraftschlüssige Verbindung.

Selbstverständlich können die Anschlüsse 33 auch direkt am ersten und/oder zweiten Bauteil angeordnet sein oder die Kanaleinheit 31 kann in ein geschlossenes Gehäuse eingefügt sein.

Fig. 2 zeigt eine geschnittene Ansicht eines erfindungsgemäßen Durchflussmessers. Der Durchflussmesser 1 umfasst eine Kanaleinheit, die aus dem ersten Bauteil 2 und einem zweiten Bauteil 3 zusammengefügt ist, sowie einer Messeinrichtung 4. Fluid strömt in den Durchflussmesser 1 ein und wird in einem nicht gezeigten Bereich auf eine Vielzahl von Kanälen 6 verteilt. Diese Aufteilung der Strömung in Kanäle ist es beispielsweise möglich, indem ein rechteckiger Kanal direkt in eine Kanaleinheit, die eine Vielzahl von Wandabschnitten 7, 9 umfasst, mündet, wodurch die Wandabschnitte 7, 9 als Stauelemente wirken und das Fluid auf die Kanäle 6 verteilt wird. Selbstverständlich sind auch alternative Ausführungen möglich, beispielsweise können die Wandabschnitte 7, 9 an ihrem der Strömung zugewandten Ende eine stromlinienförmige Form aufweisen.
Bauteil 2 besteht aus einer Basis 10 und einer Vielzahl von von dieser Basis abstehenden Wandabschnitten 9. Ebenso besteht Bauteil 3 aus einer Basis 8 und einer Vielzahl von von dieser Basis abstehenden Wandabschnitten 7. Beim Zusammenfügen der Bauteile 2, 3 werden zwischen den Wandabschnitten 7, 9 die Kanäle 6 ausgebildet. Die Kanäle werden durch eine Decke, die durch die Basis 10 des ersten Bauteils 2 gebildet wird, und einen Boden, der durch die Basis 8 des zweiten Bauteils 3 gebildet wird, sowie durch die Wand 12, die durch den Wandabschnitt 9 des ersten Bauteils 2 gebildet wird und die Wand 11, die durch den Wandabschnitt 7 des zweiten Bauteils 3 gebildet wird, gebildet.
Das erste Bauteil 2 und das zweite Bauteil 3 werde im Spritzgussverfahren herstellst. Um eine hohe Präzision zu ermöglichen, ist es daher notwendig, dass die von der Basis 8, 10 abstehenden Wandabschnitte 7, 9 Entformungsschrägen aufweisen. Daher weisen die Wandabschnitte 7, 9 eine Trapezform auf. Dies führt dazu, dass die Wände 11, 12 des Kanals 6 keinen rechten Winkel mit dem Boden und der Decke des Kanals 6 bilden. Da jedoch die Wand 12 durch das erste Bauteil 2 und die Wand 11 durch das zweite Bauteil 3 gebildet sind, führen die gleichen Entformungsschrägen der Wandabschnitte 9 und 7 dazu, dass die beiden Wände 11, 12 des Kanals 6 dennoch parallel verlaufen.
Es ist also trotz einer günstigen Herstellung mit dem Spritzgussverfahren möglich, Kanäle 6 auszubilden, deren Wände 11, 12 parallel sind. Einer der Kanäle 6 ist der Messkanal 13, in dem eine Messeinrichtung 4 angeordnet ist. Da im Durchflussmesser 1 eine Vielzahl von Kanälen vorliegt, die einen gleichen Druchflusswiderstand aufweisen, kann ein Fluid, das in den Durchflussmesser 1 einfließt, besonders gut auf die Kanäle verteilt werden und es können besonders zuverlässig Messungen an Teilströmungen durchgeführt werden.

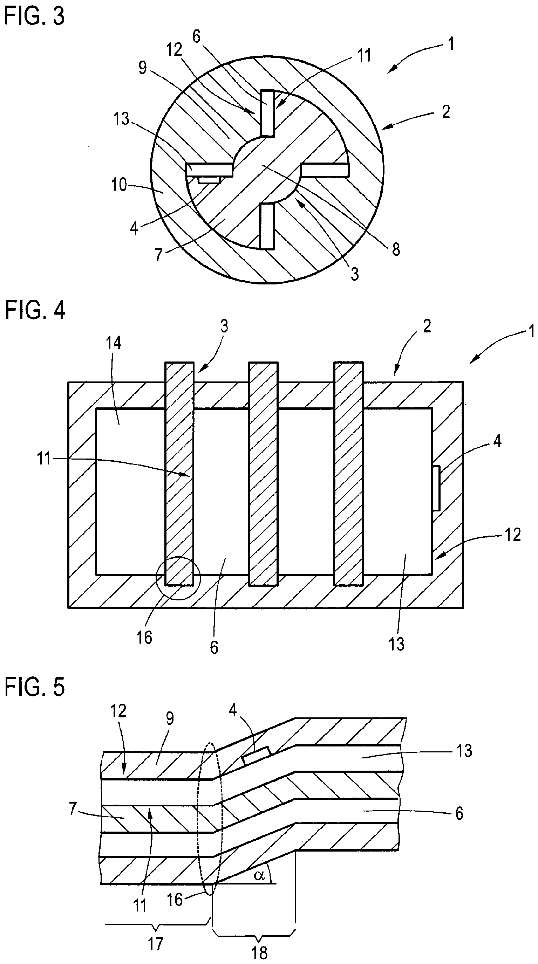

Fig. 3 zeigt ein Ausführungsbeispiel eines nicht erfindungsgemäßen Durchflussmessers. Der Durchflussmesser 1 ist hier rund ausgebildet. Damit kann beispielsweise ein besonders einfacher Anschluss an runde Rohre erreicht werden. Der Aufbau des Durchflussmessers 1 ist ähnlich dem des in Fig. 1 gezeigten Durchflussmessers. Das erste Bauteil 2 und das zweite Bauteil 3 müssen aufgrund der Form des Durchflussmessers 1 jedoch unterschiedlich aufgebaut sein. Das erste Bauteil 2 bildet hier einen Ring der die Basis 10 bildet und an dem trapezartig geformte Wandabschnitte angeordnet sind. Das zweite Bauteil 3 ist in das erste Bauteil 2 eingesteckt und weist eine im wesentlichen kreisförmige Basis 8 auf, an der ebenfalls trapezähnliche Wandabschnitte 7 angeordnet sind. Die Ausbildung der Kanäle und die Messung des Fluidflusses erfolgt äquivalent zum Durchflussmesser, der in Fig. 2 gezeigt ist. Daher soll diese Beschreibung hier nicht wiederholt werden.

Fig. 4 zeigt ein Ausführungsbeispiel eines nicht erfindungsgemäßen Durchflussmessers für ein Fluid. Der Durchflussmesser 1 ist hier aus einem ersten Bauteil 2 und mehreren zweiten Bauteilen 3 zusammengefügt. Das erste Bauteil 1 bildet den Boden und die Decke der Kanäle sowie die beiden Seitenwände 12. Durch Schlitze in der Decke des ersten Bauteils 2 sind die zweiten Bauteile 3 in das erste Bauteil 2 eingefügt. Im Bereich 15 greifen die zweiten Bauteile 3 in Nuten in der Innenoberfläche des Bodens des ersten Bauteils 2 ein. Die inneren Kanäle 6 werden hier jeweils durch zwei Wände 11 der zweiten Bauteile 3 gebildet, wobei die linke und rechte Wand eines inneren Kanals 6 jeweils durch unterschiedliche zweite Bauteile 3 gebildet werden. Die Wände der Seitenkanäle 14 sind durch eine Wand 11 des zweiten Bauteils 3 und eine Wand 12 des ersten Bauteils 2 gebildet. Der Messkanal 13 ist hier ein Seitenkanal 14. Im Messkanal 13 ist ein Sensor 4 zur Messung des Durchflusses angeordnet.

Fig. 5 zeigt eine geschnittene Ansicht eines nicht erfindungsgemäßen Durchflussmessers, bei dem ein Verengungsbereich durch eine Winkelung der Kanäle erreicht wird. Ein erster Bereich des Kanals 6 und des Messkanals 13 laufen geradlinig und sind ähnlich aufgebaut, wie die Kanäle in den vorangehenden Ausführungsbeispielen. In Fig. 5 liegt die Strömungsrichtung des Fluids in den Kanälen jedoch in der Schnittebene. Der oberste und unterste Wandabschnitt 9 sind Teil eines ersten Bauteils. Der mittlere Wandabschnitt 7 ist Teil eines zweiten Bauteils. Die ersten und zweiten Bauteile sind hier im Spritzgussverfahren aus Kunststoff gefertigt und entsprechend den in Fig. 2 beschriebenen Bauteilen aufgebaut.

Es ist anzumerken, dass ein ähnlicher Aufbau auch möglich ist, wenn jeder der Wandabschnitte als separates Bauteil ausgebildet ist, wie beispielsweise in Fig. 4 gezeigt. In diesem Fall ist es beispielsweise auch möglich, die Wandabschnitte aus eingesteckten Blechen, oder ähnlichem zu bilden.
Am Abwinkelungsbereich 16 ändert sich der Verlauf der Wandabschnitte 7, 9 um einen Winkel a. Dementsprechend ändert sich auch die Strömungsrichtung eines aus Abschnitt 17 in den Abwinkelungsbereich 16 einströmenden Fluids, so dass die Richtung des Fluids wieder parallel zu den Wänden ist, wobei die Änderung der Strömungsrichtung an der Abwinkelungsbereich 16 so erfolgt, dass die Strömungen im Wesentlichen laminar bleibt.
Da die Wandabschnitte 9, 7 identisch geformt sind und nur in Richtung senkrecht zur Strömungsrichtung gegeneinander verschoben sind, führt das Abwinkeln im Abwinkelungsbereich 16 um den Winkel α dazu, dass sich die Breite der Kanäle ändert. Die Breite der Kanäle im Bereich 18 entspricht dem Produkt der Breite der Kanäle 6, 13 im Bereich 17 mit dem Kosinus des Winkels a. Der Winkel a ist beispielsweise 45°. Damit ist die Breite der Kanäle im Bereich 18 ca. 70% der Breite der Kanäle 6, 13 im Bereich 17.

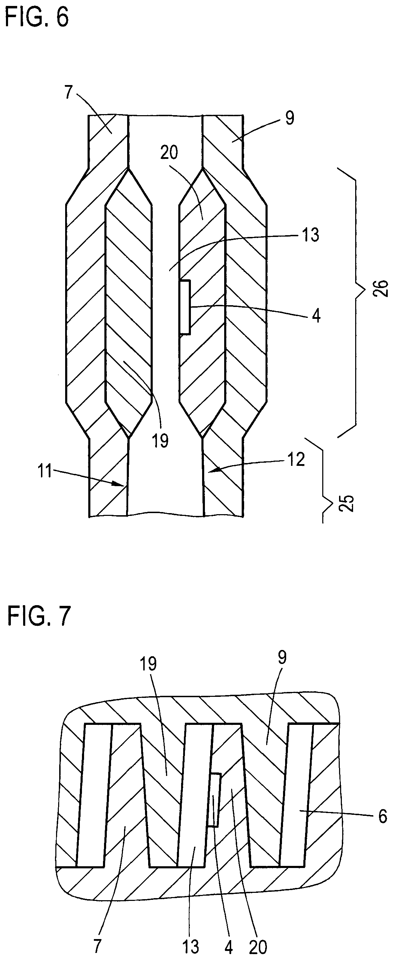

Fig. 6 und Fig. 7 zeigen ein weiteres Ausführungsbeispiel zur Verengung eines Messkanals im Messbereich eines erfindungsgemäßen Durchflussmessers. Im nicht verengten Bereich 25 ist der Durchflussmesser im Wesentlichen aufgebaut wie der in Fig. 2 gezeigte Durchflussmesser. Auch hier wird der Messkanal 13 durch die Wand 11, die durch den Wandabschnitt 7 des zweiten Bauteils gebildet wird und die Wand 12, die durch den Wandabschnitt 9 des ersten Bauteils gebildet wird, begrenzt. Im Bereich 18 weist das zweite Bauteil jedoch neben dem Wandabschnitt 7 einen weiteren Wandabschnitt 20 und das erste Bauteil neben dem Wandabschnitt 9 einen weiteren Wandabschnitt 19 auf. Die weiteren Wandabschnitte 20, 19 weisen gegenüber den Wandabschnitten 7 und 9 ein kürzere Länge auf, das heißt, sie erstrecken sich nicht über die gesamte Kanaleinheit, sondern nur über einen kurzen Abschnitt der Kanaleinheit. Die Wandabschnitte 7 und 9 sind zudem gegenüber ihrer Position in Abschnitt 25 in Abschnitt 26 senkrecht zur Kanalrichtung versetzt. Somit wird durch das Einbringen zusätzlicher Wandabschnitte 19, 20 in den Kanal 13 eine Verringerung der Kanalbreite erreicht.
Diese Verengung hat mehrere Folgen. Zum einen werden die Wände 11, 12 in Abschnitt 26 durch andere Bauelemente gebildet als im Abschnitt 25. So wird Wand 11 in Abschnitt 25 durch den Wandabschnitt 7, der Teil des zweiten Bauelements ist, gebildet, in Abschnitt 26 jedoch durch den weiteren Wandabschnitt 19, der Teil des ersten Bauelements ist. Des Weiteren führt das Einbringen der weiteren Wandabschnitte 19, 20 im Bereich 26 dazu, dass sich die Verkippung des Kanals 13 im Bereich 26 gegenüber der Verkippung im Bereich 25 ändert. Dies ist besonders gut zu erkennen, wenn die geschnittenen Ansichten senkrecht zur Kanalrichtung betrachtet werden. So zeigt Fig. 7 einen Schnitt des in Fig. 6 gezeigten Durchflussmessers im Bereich 26. Ein Schnitt des Fig. 6 gezeigten Durchflussmessers in Bereich 25 entspricht im Wesentlichen dem in Fig. 2 gezeigten Schnitt. Durch Vergleich von Fig. 2 und Fig. 7 ist zu erkennen, dass in Fig. 2 benachbarte Kanäle abwechselnd nach links und rechts geneigt sind, während in Fig. 7 alle Kanäle nach rechts geneigt sind.
Dies ist dadurch zu erklären, dass die Neigung eines Kanals dadurch bestimmt wird, welches Bauelement die linke bzw. die rechte Wand des Bauelements bildet. In Bereich 25 bzw. Fig. 2 wird die linke Wand benachbarter Kanäle von verschiedenen Bauelementen gebildet, was zu unterschiedlichen Neigungswinkeln führt. Bei einem Durchflussmesser gemäß Fig. 6 und Fig. 7 sind im Bereich 26 in jedem zweiten Kanal die Wandabschnitte 19, 20 eingebracht. Dies führt dazu, dass in Bereich 26 die linke Wand jedes Kanals durch das erste Bauelement und die rechte Wand jedes Kanals durch das zweite Bauelement gebildet wird. Dies ist wiederum in Fig. 7 gut zu erkennen. In Kanal 13 wird die linke Wand durch das zusätzliche Wandelemente 19, das durch das erste Bauelement gebildet wird, gebildet, im benachbarten Kanal 6 ist die linke Wand durch den Wandabschnitt 9 gebildet, der ebenfalls Teil des ersten Bauelements ist.

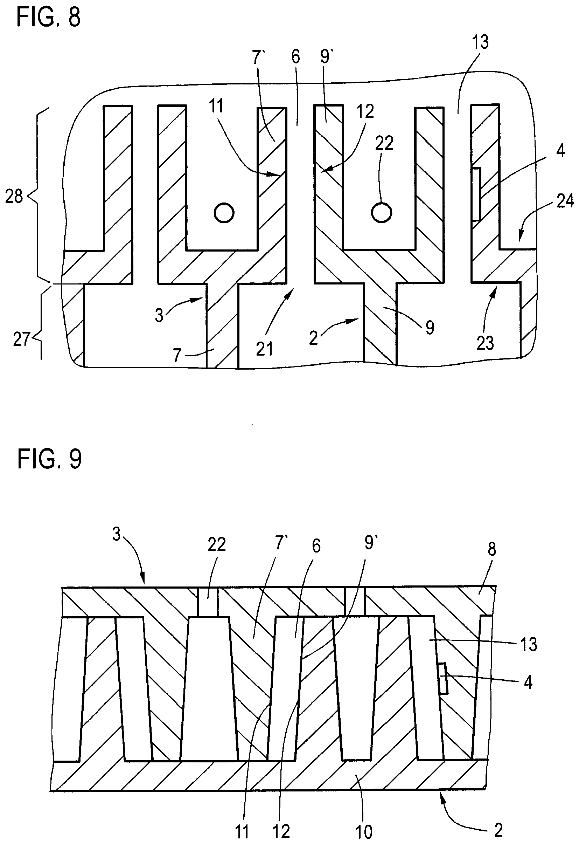

Fig. 8 zeigt ein weiteres Ausführungsbeispiel eines erfindungsgemäßen Durchflussmessers zur Bildung einer Verengung eines Kanals 6. Die Kanaleinheit des Durchflussmessers ist wiederum aus zwei Bauteilen gebildet, wobei das erste Bauteil die Wandabschnitte 9, 9' ausbildet und das zweite Bauteil die Wandabschnitte 7, 7'. In einem ersten Bereich 27 entspricht der Aufbau der Kanaleinrichtung dem in Fig. 2 gezeigten Aufbau. In Bereich 28 werden die beiden Wandabschnitte 7, 9 Y-förmig in jeweils zwei Wandabschnitte 7' und 9' aufgeteilt, wodurch ein Zwischenraum zwischen den Kanälen gebildet wird. Damit kann die Breite des Kanals 6 deutlich reduziert werden.
Sollte eine ähnliche Breitenreduzierung ein durch eine Erhöhung der Wanddicke erfolgen, ist bei vielen Herstellungsverfahren, beispielsweise Plastikspritzguss, die Bildung von Einfallstellen in den Wänden und damit eine Verringerung der Präzision zu befürchten. Daher ist die gezeigte Wandführung vorteilhaft. Zwischen den Bereichen 27 und 28 ist ein Verengungsbereich 21 angeordnet, in dem die Wände 23, 24 im Wesentlichen senkrecht zur Strömungsrichtung des Fluids geführt sind. Um Turbulenzen zu vermeiden, sollte in diesem Bereich die dem Fluid zugewandte Wand 23 im Wesentlichen senkrecht auf Boden und Decke des Kanals stehen, wobei die Entformungsschräge in diesem Bereich an der dem Zwischenraum zugewandten Wand 24 angeordnet werden kann.

Im Bereich 28 sind im Bereich der Zwischenräume zudem Öffnungen 22 gezeigt. In dem gezeigten Ausführungsbeispiel münden die Wandabschnitte 7' und 9' nach dem Verengungsbereich 28 frei in einen weiteren Kanal. Ohne eine zusätzliche Belüftung könnten in den Zwischenräumen Fluide relativ lange verweilen. Würde sich in diesem Fall die Gaszusammensetzung, die den Durchlaufmesser durchströmt, verändern, wäre dies nachteilig, da das Gas aus den Zwischenräumen in den Messbereich diffundieren und die Messung verfälschen könnte.

So ist eine Spülung der Zwischenräume durch die Öffnungen 22 im Boden bzw. der Decke vorteilhaft. Die Spülung kann beispielsweise mit Gas erfolgen, das vom Ausgang des Durchflussmessers zurückgeführt wird, es kann aber auch eine Reinigung des Fluids erfolgen, bevor es in die Öffnungen 22 eingeführt wird. Um den Aufbau der Y-förmigen Wandabschnitte, insbesondere im Bereich 28 zu verdeutlichen, zeigt Fig. 9 einen Schnitt senkrecht zur Kanalrichtung. Es ist zu erkennen, dass das erste Bauteil 2 und das zweite Bauteil 3 derart ineinandergreifen, dass zwischen jeweils zwei Wandabschnitten 7' des zweiten Bauteils 3 in Querrichtung zwei Wandabschnitte 9' des ersten Bauteils 2 liegen. So bilden die Wandabschnitte 7' die linke Wand des Kanals 6 und die rechte Wand des Messkanals 13. Die Wandabschnitte 9' des ersten Bauteils 2 bilden die rechte Wand des Kanals 6, die linke Wand des Kanals 13 sowie des Wände des Zwischenraums zwischen den Kanälen 6 und 13.

Selbstverständlich können die einzelnen Merkmale der Ausführungsbeispiele frei kombiniert werden. So sind alle beschriebenen Beispiele zur Verengung von Kanälen zwar anhand der Nutzung von zwei ineinandergreifenden Bauteilen beschrieben, für den Fachmann ist jedoch leicht zu erkennen, dass die beschriebenen Beispiele auch leicht auf den Fall anpassbar sind, in dem die Wände durch in einen Grundkörper eingefügte zweite Bauelemente gebildet werden. Des weiteren erschließt sich dem Fachmann auch leicht, dass mehrere Kanalebenen übereinander angeordnet werden können, indem auf der zweiten Seite der Basis des ersten und/oder des zweiten Bauteils weitere Wandabschnitte angeordnet werden, die Wände der Kanäle einer zweiten Kanalebene bilden. Ebenso leicht ist eine Bildung eines mehrlagigen Grundkörpers oder das Stapeln mehrerer Grundkörper möglich, wobei die flächigen Einsteckelemente vorzugsweise die Wände mehrerer übereinanderliegender Kanäle bilden. Auch können die verschiedenen Beispiele zur Kanalverengung und Richtungsänderung auf die beispielhaft in Fig. 3 beschriebene runde Geometrie übertragen werden. Zudem ist selbstverständlich in allen Beispielen die Anzahl der gebildeten Kanäle frei variierbar.

## Patentansprüche

1. Durchflussmesser für ein Fluid, umfassend mindestens zwei Kanäle (6,13), die je einen Boden, eine Decke und zwei Wände (11,12) aufweisen, wobei mindestens einer der Kanäle (6,13) ein Messkanal (13) ist, in dem eine Messeinrichtung (4) angeordnet ist, wobei der Durchflussmesser (1) eine die Kanäle (6,13) ausbildende Kanaleinheit (31) umfasst, wobei die Kanaleinheit (31) aus einem ersten Bauteil (2) und einem zweiten Bauteil (3) besteht, die ineinandergefügt sind und sich im zusammengefügten Zustand unter Ausformung der Kanäle (6,13) ergänzen, wobei bei wenigstens einem der Kanäle (6,13) zumindest in einem Längsabschnitt des Kanals die erste Wand (12) des Kanals aus dem ersten Bauteile (2) gebildet ist und die zweite Wand (11) des Kanals aus dem zweiten Bauteil (3),
**dadurch gekennzeichnet,**
**dass** das erste und das zweite Bauteil (2,3) jeweils eine Basis (8,10) und von der Basis (8, 10) abstehende Wandabschnitte (7, 9),welche im Längsabschnitt im Querschnitt trapezförmig sind, aufweisen.

2. Durchflussmesser nach Anspruch 1, **dadurch gekennzeichnet, dass** der Längsabschnitt mindestens 7 mm, insbesondere mindestens 10 mm lang ist.

3. Durchflussmesser nach Anspruch 1 oder 2, **dadurch gekennzeichnet, dass** wenigstens einer der Wandabschnitte (7, 9) im Längsabschnitt im Querschnitt gleichschenkelig trapezförmig ist.

4. Durchflussmesser nach einem der vorangehenden Ansprüche, **dadurch gekennzeichnet, dass** die Basis (8, 10) im Längsabschnitt senkrecht zur Kanallängsrichtung flach oder ringförmig ist.

5. Durchflussmesser nach einem der vorangehenden Ansprüche, **dadurch gekennzeichnet, dass** der Winkel zwischen der Basis (8, 10) und mindestens einer Seitenfläche des trapezförmigen Segments zwischen 87,0° und 89,5°, insbesondere zwischen 87,5° und 88,7° ist.

6. Durchflussmesser nach einem der vorangehenden Ansprüche, **dadurch gekennzeichnet, dass** wenigstens einer der Kanäle (6, 13) wenigstens einen Abwinkelungsbereich (16) aufweist, in dem sich die Richtung des Kanals (6,13) ändert, wobei die Breite des Kanals (6, 13) vor und nach dem Abwinkelungsbereich (16) unterschiedlich ist und wobei insbesondere die beiden Wände (11, 12) des Kanals (6, 13) im Abwinkelungsbereich (16) die gleiche Form aufweisen.

7. Durchflussmesser nach einem der vorangehenden Ansprüche, **dadurch gekennzeichnet, dass** mindestens einer der Kanäle (6, 13) mindestens einen ersten Teilbereich (25) und mindestens einen zweiten Teilbereich (26) aufweist, wobei mindestens eine der Wände (11, 12) im ersten Teilbereich (25) aus einem anderen Bauteil (2,3) gebildet ist als im zweiten Teilbereich (26).

8. Durchflussmesser nach einem der vorangehenden Ansprüche, **dadurch gekennzeichnet, dass** mindestens zwei der Kanäle (6, 13) mindestens einen Verengungsbereich (21) aufweisen, in dem die Wände (11, 12) der Kanäle (6, 13) derart geführt sind, dass sich die Breite der Kanäle (6, 13) verringert, wobei sich im Verengungsbereich (21) die Dicke wenigstens einer Wand zwischen den Kanälen (6, 13) erhöht oder je eine der Wände (11,12) eines ersten und eines zweiten der Kanäle (6, 13) entgegengesetzte Abwinkelungen aufweisen, wodurch die Wände (11,12) auseinanderlaufen und einen Zwischenraum bilden.

9. Durchflussmesser nach Anspruch 8 **dadurch gekennzeichnet, dass** die Wände (11, 12) des Zwischenraums frei in einem Kanal (6, 13) enden, oder dass der Zwischenraum abgeschlossen ist.

10. Durchflussmesser nach Anspruch 8 oder 9, **dadurch gekennzeichnet, dass** der Boden und/oder die Decke im Bereich des Zwischenraums mindestens eine Öffnung (22) zur Zuführung von Fluid, insbesondere gereinigtem Fluid, aufweisen.

11. Durchflussmesser nach einem der Ansprüche 8 bis 10, **dadurch gekennzeichnet, dass** im Verengungsbereich (21) die Wand (23) kanalseitig senkrecht auf Boden und Decke steht, wobei die Wand (24) zwischenraumseitig abgeschrägt ist.

12. Durchflussmesser nach einem der vorangehenden Ansprüche, **dadurch gekennzeichnet, dass** die Kanaleinheit (31) Kanäle (6, 13) in wenigstens zwei Ebenen ausbildet.

13. Durchflussmesser nach einem der vorangehenden Ansprüche, **dadurch gekennzeichnet, dass** in einem Abschnitt der Kanaleinrichtung, der mindestens 7 mm, insbesondere mindestens 10 mm, lang ist, oder auf der ganzen Länge der Kanaleinheit (31) die Breite jedes Kanals (6, 13) gleich ist, insbesondere zwischen 0,5 mm und 1,5 mm, und/oder das Verhältnis zwischen der Höhe und der Breite wenigstens eines der Kanäle (6, 13) mindestens 3:1, insbesondere mindestens 5:1, ist und/oder die Materialstärke der Wände (11, 12) 1 mm bis 3 mm, insbesondere 1,5 mm bis 2,5 mm ist.

14. Durchflussmesser nach einem der vorangehenden Ansprüche, **dadurch gekennzeichnet, dass** das Verhältnis zwischen der Höhe und der Breite wenigstens eines der Kanäle (6, 13) auf der ganzen Länge der Kanaleinheit (31) konstant bleibt.

15. Durchflussmesser nach einem der vorangehenden Ansprüche, **dadurch gekennzeichnet, dass** im zusammengefügten Zustand ein an den Bauteilen (2, 3) oder separat angeordnetes Sicherungselement oder ein fester Sitz der Bauteile (2, 3) aneinander eine relative Verschiebung der Bauteile (2, 3) verhindert.

16. Durchflussmesser nach einem der vorangehenden Ansprüche, **dadurch gekennzeichnet, dass** die Bauteile (2, 3) aus Kunststoff, insbesondere durch Spritzguss, oder, insbesondere die Einsteckbauteile, aus Metall, vorzugsweise Metallblech, hergestellt sind.

17. Durchflussmesser nach einem der vorangehenden Ansprüche, **dadurch gekennzeichnet, dass** er zwischen der Fügestelle der kanalbildenden Bauteile (2, 3) zumindest abschnittsweise eine Labyrinth-Dichtung oder eine Dichtung mit einem Formdichtelement, einem elastischen Dichtmittel oder einem abdichtenden Klebemittel umfasst.

18. Durchflussmesser nach einem der vorangehenden Ansprüche, **dadurch gekennzeichnet, dass** er Führungsmittel besitzt, welche gewährleisten, dass die Teile bei der Montage in die genaue Fügeposition geleitet werden.

## Claims

1. Flow meter for a fluid, said flow meter including at least two channels (6, 13) which each comprise a floor, a ceiling and two walls (11, 12), wherein at least one of the channels (6, 13) is a measuring channel (13) in which a measuring device (4) is arranged, wherein the flow meter (1) includes a channel unit (31) which realizes the channels (6, 13), wherein the channel unit (31) consists of one first component (2) and one second component (3) which are fitted into one another and in the joined state complement one another thus forming the channels (6, 13), wherein in the case of at least one of the channels (6, 13), at least on a longitudinal portion of the channel, the first wall (12) of the channel is formed from the first component (2) and the second wall (11) of the channel is formed from the second component (3),
**characterized in that**
the first and the second component (2, 3) comprise in each case a base (8, 10) and wall portions (7, 9) which protrude from the base (8, 10) and are trapezoidal in cross section in the longitudinal portion.

2. Flow meter according to Claim 1, **characterized in that** the length of the longitudinal portion is at least 7 mm, in particular at least 10 mm.

3. Flow meter according to Claim 1 or 2, **characterized in that** at least one of the wall portions (7, 9) is equiangularly trapezoidal in cross section in the longitudinal portion.

4. Flow meter according to one of the preceding claims, **characterized in that** the base (8, 10) is flat or ring-shaped perpendicular to the longitudinal direction of the channel in the longitudinal portion.

5. Flow meter according to one of the preceding claims, **characterized in that** the angle between the base (8, 10) and at least one side face of the trapezoidal segment is between 87.0° and 89.5°, in particular between 87.5° and 88.7°.

6. Flow meter according to one of the preceding claims, **characterized in that** at least one of the channels (6, 13) comprises at least one angled region (16) in which the direction of the channel (6, 13) changes, wherein the width of the channel (6, 13) is different upstream and downstream of the angled region (16) and wherein in particular the two walls (11, 12) of the channel (6, 13) comprise the identical form in the angled region (16).

7. Flow meter according to one of the preceding claims, **characterized in that** at least one of the channels (6, 13) comprises at least one first part region (25) and at least one second part region (26), wherein at least one of the walls (11, 12) in the first part region (25) is formed from a different component (2, 3) to in the second part region (26).

8. Flow meter according to one of the preceding claims, **characterized in that** at least two of the channels (6, 13) comprise at least one narrowing region (21) in which the walls (11, 12) of the channels (6, 13) are guided in such a manner that the width of the channels (6, 31) decreases, wherein in the narrowing region (21) the thickness of at least one wall between the channels (6, 13) is increased or one each of the walls (11, 12) of a first and of a second of the channels (6, 13) comprise opposing angulations, as a result of which the walls (11, 12) diverge and form a space.

9. Flow meter according to Claim 8, **characterized in that** the walls (11, 12) of the space end freely in a channel (6, 13) or **in that** the space is closed off.

10. Flow meter according to Claim 8 or 9, **characterized in that** the floor and/or the ceiling in the region of the space comprise at least one opening (22) for supplying fluid, in particular filtered fluid.

11. Flow meter according to one of Claims 8 to 10, **characterized in that** in the narrowing region (21) the wall (23) on the channel side is perpendicular to the floor and ceiling, wherein the wall (24) on the space side is beveled.

12. Flow meter according to one of the preceding claims, **characterized in that** the channel unit (31) realizes channels (6, 13) in at least two planes.

13. Flow meter according to one of the preceding claims, **characterized in that** in a portion of the channel device, the length of which is a least 7 mm, in particular at least 10 mm, or over the entire length of the channel unit (31), the width of each channel (6, 13) is the same, in particular between 0.5 mm and 1.5 mm, and/or the ratio between the height and the width of at least one of the channels (6, 13) is at least 3:1, in particular at least 5:1 and/or the material thickness of the walls (11,12) is between 1 mm and 3 mm, in particular between 1.5 mm and 2.5 mm.

14. Flow meter according to one of the preceding claims, **characterized in that** the ratio between the height and the width of at least one of the channels (6, 13) remains constant over the entire length of the channel unit (31).

15. Flow meter according to one of the preceding claims, **characterized in that** in the joined state, a locking element, which is arranged on the components (2, 3) or is arranged in a separate manner, or a firm seat of the components (2, 3) with regard to one another prevents a relative displacement of the components (2, 3).

16. Flow meter according to one of the preceding claims, **characterized in that** the components (2, 3) are produced from plastics material, in particular as a result of injection molding, or are produced from metal, preferably sheet metal, in particular the plugin parts.

17. Flow meter according to one of the preceding claims, **characterized in that** said flow meter comprises a labyrinth seal or a seal with a molded sealing element, an elastic sealing means or a sealing adhesive at least in portions between the joint between the channel-forming components (2, 3).

18. Flow meter according to one of the preceding claims, **characterized in that** said flow meter has guide means which ensure that the parts are directed into the precise joining position when being assembled.

## Revendications

1. Débitmètre pour un fluide, comprenant au moins deux canaux (6, 13), qui présentent chacun un fond, un plafond et deux parois (11, 12), dans lequel au moins un des canaux (6, 13) est un canal de mesure (13), dans lequel un dispositif de mesure (4) est agencé, dans lequel le débitmètre (1) comprend une unité de canal (31) formant les canaux (6, 13), dans lequel l'unité de canal (31) se compose d'un premier composant (2) et d'un deuxième composant (3), qui sont engagés l'un dans l'autre et qui dans l'état engagé se complètent en formant les canaux (6, 13), dans lequel dans au moins un des canaux (6, 13) la première paroi (12) du canal est formée au moins dans une partie longitudinale du canal par le premier composant (2) et la deuxième paroi (11) du canal est formée par le deuxième composant (3), **caractérisé en ce que** le premier et le deuxième composants (2, 3) présentent respectivement une base (8, 10) et des parties de paroi (7, 9) partant de la base (8, 10), qui sont de forme trapézoïdale en section transversale dans la partie longitudinale.

2. Débitmètre selon la revendication 1, **caractérisé en ce que** la partie longitudinale a une longueur d'au moins 7 mm, en particulier d'au moins 10 mm.

3. Débitmètre selon la revendication 1 ou 2, **caractérisé en ce qu'**au moins une des parties de paroi (7, 9) est de forme trapézoïdale isocèle en section transversale dans la partie longitudinale.

4. Débitmètre selon l'une quelconque des revendications précédentes, **caractérisé en ce que** la base (8, 10) est plate ou annulaire perpendiculairement à la direction longitudinale du canal dans la partie longitudinale.

5. Débitmètre selon l'une quelconque des revendications précédentes, **caractérisé en ce que** l'angle entre la base (8, 10) et au moins une face latérale du segment trapézoïdal se situe entre 87,0° et 89,5°, en particulier entre 87,5° et 88,7°.

6. Débitmètre selon l'une quelconque des revendications précédentes, **caractérisé en ce qu'**au moins un des canaux (6, 13) présente au moins une zone coudée (16), dans laquelle la direction du canal (6, 13) change, dans lequel la largeur du canal (6, 13) est différente avant et après la zone coudée (16) et dans lequel en particulier les parois (11, 12) du canal (6, 13) présentent la même forme dans la zone coudée (16).

7. Débitmètre selon l'une quelconque des revendications précédentes, **caractérisé en ce qu'**au moins un des canaux (6, 13) présente au moins une première région partielle (25) et au moins une deuxième région partielle (26), dans lequel au moins une des parois (11, 12) est formée dans la première région partielle (25) par un autre composant (2, 3) que dans la deuxième région partielle (26).

8. Débitmètre selon l'une quelconque des revendications précédentes, **caractérisé en ce qu'**au moins deux des canaux (6, 13) présentent au moins une région d'étranglement (21), dans laquelle les parois (11, 12) des canaux (6, 13) sont guidés de telle manière que la largeur des canaux (6, 13) diminue, dans lequel l'épaisseur d'au moins une paroi entre les canaux (6, 13) augmente dans la région d'étranglement (21) ou chaque fois une des parois (11, 12) d'un premier et d'un deuxième des canaux (6, 13) présente des coudes opposés, et les parois (11, 12) s'écartent ainsi l'une de l'autre et forment un espace intermédiaire.

9. Débitmètre selon la revendication 8, **caractérisé en ce que** les parois (11, 12) de l'espace intermédiaire se terminent librement dans un canal (6, 13), ou **en ce que** l'espace intermédiaire est fermé.

10. Débitmètre selon la revendication 8 ou 9, **caractérisé en ce que** le fond et/ou le plafond présente dans la région de l'espace intermédiaire au moins une ouverture (22) pour l'arrivée de fluide, en particulier de fluide épuré.

11. Débitmètre selon l'une quelconque des revendications 8 à 10, **caractérisé en ce que** la paroi (23) côté canal est perpendiculaire au fond et au plafond dans la région d'étranglement (21), dans lequel la paroi (24) côté espace intermédiaire est inclinée.

12. Débitmètre selon l'une quelconque des revendications précédentes, **caractérisé en ce que** l'unité de canal (31) forme des canaux (6, 13) dans au moins deux plans.

13. Débitmètre selon l'une quelconque des revendications précédentes, **caractérisé en ce que** dans une partie du dispositif de canal, qui a une longueur d'au moins 7 mm, en particulier d'au moins 10 mm, ou sur toute la longueur de l'unité de canal (31), la largeur de chaque canal (6, 13) est égale, en particulier entre 0,5 mm et 1,5 mm, et/ou le rapport entre la hauteur et la largeur d'au moins un des canaux (6, 13) vaut au moins 3:1, en particulier au moins 5:1 et/ou l'épaisseur de matière des parois (11, 12) vaut 1 mm à 3 mm, en particulier 1,5 mm à 2,5 mm.

14. Débitmètre selon l'une quelconque des revendications précédentes, **caractérisé en ce que** le rapport entre la hauteur et la largeur d'au moins un des canaux (6, 13) reste constant sur toute la longueur de l'unité de canal (31).

15. Débitmètre selon l'une quelconque des revendications précédentes, **caractérisé en ce que** dans l'état assemblé un élément de blocage disposé sur les composants (2, 3) ou séparément ou un appui fixe des composants (2, 3) l'un contre l'autre empêche un déplacement relatif des composants (2, 3).

16. Débitmètre selon l'une quelconque des revendications précédentes, **caractérisé en ce que** les composants (2, 3) sont fabriqués en matière plastique, en particulier par coulée par injection, ou en particulier les composants à insérer sont fabriqués en métal, de préférence en tôle métallique.

17. Débitmètre selon l'une quelconque des revendications précédentes, **caractérisé en ce qu'**il comprend entre le point de jonction des composants (2, 3) formant des canaux au moins localement un joint à labyrinthe ou un joint avec un élément d'étanchéité moulé, un moyen d'étanchéité élastique ou agent adhésif d'étanchéité.

18. Débitmètre selon l'une quelconque des revendications précédentes, **caractérisé en ce qu'**il comporte des moyens de guidage, qui garantissent que les parties sont guidées dans la position de jonction précise lors du montage.
